# EUROPÄISCHE PATENTSCHRIFT

(11) **EP 2 877 527 B1**
(45) Veröffentlichungstag und Bekanntmachung des Hinweises auf die Patenterteilung: **18.04.2018**
(21) Anmeldenummer: 13737209.0
(22) Anmeldetag: 10.07.2013
(51) Int. Cl.: C08K 5/3472, C08K 9/04, C08L 83/04, C09C 1/30

(54) **ADDITIONSVERNETZENDE SILICONZUSAMMENSETZUNG MIT NIEDRIGEM DRUCKVERFORMUNGSREST**
ADDITION-CROSSLINKING SILICONE COMPOSITION WITH LOW COMPRESSION SET
COMPOSITION DE SILICONE RÉTICULANT PAR ADDITION À FAIBLE DÉFORMATION RÉMANENTE À LA COMPRESSION

(30) Priorität: 27.07.2012 DE 102012213260
(43) Veröffentlichungstag der Anmeldung: 03.06.2015
(73) Patentinhaber: Wacker Chemie AG, 81737 München (DE)
(72) Erfinder: FUNK, Enno, 84561 Mehring (DE); LEX, Martin, 84561 Mehring (DE)
(74) Vertreter: Fritz, Helmut
(86) Internationale Anmeldenummer: PCT/EP2013/064609
(87) Internationale Veröffentlichungsnummer: WO 2014/016122

(56) Entgegenhaltungen:
- EP-A1- 0 822 234
- EP-A2- 0 388 201
- WO-A2-2012/031183
- US-A1- 2006 094 797

## Beschreibung

Die Erfindung betrifft eine additionsvernetzbare Siliconmischung (S), enthaltend an Kieselsäure gebundenes 3-Amino-1,2,4-triazol-5-thiol als Additiv.

In EP 0 834 534 A1 werden zu Elastomeren vernetzbare Massen beschrieben, die als Zusätze zur Erniedrigung des Druckverformungsrests organische Schwefelverbindungen aufweisen. Die organischen Schwefelverbindungen können auf einen anorganischen Füllstoff aufgebracht sein.
In der EP 0 442 143 A1 wird ein Verfahren zur Herstellung von mit 3-Thiocyanatopropyltriethoxysilan oder Bis(3-trimethoxysilylpropyl)-tetrasulfan oberflächenmodifizierten oxidischen oder silicatischen Füllstoffen beschrieben.
Die beste Erniedrigung des Druckverformungsrests wird durch 3-Mercapto-1,2,4-triazol erreicht. In US 5,104,919 werden durch Additionsvernetzung härtbare Siliconzusammensetzungen beschrieben, welche Triazolverbindungen enthalten, darunter auch 3-Mercapto-1,2,4-triazol. Die Triazolverbindung wird zur besseren Dispergierung der Zusammensetzung als Lösung in einem organischen Lösemittel zugesetzt. Der Kautschuk erhält dadurch eine leichte gelbe Färbung und Trübung.

Gegenstand der Erfindung ist eine additionsvernetzbare Siliconmischung (S), enthaltend
(A) mindestens zwei Alkenylgruppen pro Molekül enthaltendes Polyorganosiloxan mit einer Viskosität bei 25°C von 0,2 bis 1000 Pa·s,
(B) SiH-funktionelles Vernetzungsmittel,
(C) Hydrosilylierungskatalysator, und
(D) 10 bis 200 Gew.-ppm bezogen auf die Siliconmischung (S) an Kieselsäure gebundenes 3-Amino-1,2,4-triazol-5-thiol.

Durch die chemische Anbindung des 3-Mercapto-1,2,4-triazols an Kieselsäure wird ein niedrigerer Druckverformungsrest der Vulkanisate erreicht, ohne eine Trübung oder Gelbfärbung in Kauf nehmen zu müssen. Darüber hinaus wurde überraschenderweise festgestellt, dass die Anspringtemperatur der additionsvernetzenden Siliconmischung (S) im Vergleich zu Siliconmischungen mit ungebundenem 3-Mercapto-1,2,4-triazol niedriger ist und die Vulkanisation besser, insbesondere schneller abläuft.

Das Alkenylgruppen enthaltende Polyorganosiloxan (A) besitzt vorzugsweise eine Zusammensetzung der durchschnittlichen allgemeinen Formel (1)

R¹ₓR²_{y}SiO_{(4-x-y)/2} (1),

auf, in der
- **R¹**: einen einwertigen, gegebenenfalls halogen- oder cyanosubstituierten, gegebenenfalls über eine organische zweiwertige Gruppe an Silicium gebundenen C₁-C₁₀-Kohlenwasserstoffrest, der aliphatische Kohlenstoff-Kohlenstoff Mehrfachbindungen enthält,
- **R²**: einen einwertigen, gegebenenfalls halogen- oder cyanosubstituierten, über SiC-gebundenen C₁-C₁₀-Kohlenwasserstoffrest, der frei ist von aliphatischen Kohlenstoff-Kohlenstoff Mehrfachbindungen
- **x**: eine solche nichtnegative Zahl, dass mindestens zwei Reste **R¹** in jedem Molekül vorhanden sind, und
- **y**: eine nicht negative Zahl, so dass **(x+y)** im Bereich von 1,8 bis 2,5 liegt, bedeuten.

Die Alkenylgruppen **R¹** sind einer Anlagerungsreaktion mit einem SiH-funktionellen Vernetzungsmittel (B) zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen **R¹** an Silicium der Polymerkette gebunden sein können, bestehen beispielsweise aus Oxyalkyleneinheiten, wie solche der allgemeinen Formel (2)

-(O)ₘ[(CH₂)ₙO]ₒ- (2),

in der
- **m**: die Werte 0 oder 1, insbesondere 0,
- **n**: Werte von 1 bis 4, insbesondere 1 oder 2 und
- **o**: Werte von 1 bis 20, insbesondere von 1 bis 5 bedeuten.
Die Oxyalkyleneinheiten der allgemeinen Formel (2) sind links an ein Siliciumatom gebunden.

Die Reste **R¹** können in jeder Position der Polymerkette, insbesondere an den endständigen Siliciumatomen, gebunden sein.

Beispiele für unsubstituierte Reste **R²** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthylrest; Alkarylreste, wie o-, m-, p-Tolylreste und Ethylphenylreste; Aralkylreste, wie der Benzylrest, der alpha- und der β-Phenylethylrest.

Beispiele für substituierte Kohlenwasserstoffreste als Reste **R²** sind halogenierte Kohlenwasserstoffe, wie der Chlormethyl-, 3-Chlorpropyl-, 3-Brompropyl, 3,3,3-Trifluorpropyl und 5,5,5,4,4,3,3-Heptafluorpentylrest sowie der Chlorphenyl-, Dichlorphenyl- und Trifluortolylrest.

**R²** weist vorzugsweise 1 bis 6 Kohlenstoffatome auf. Insbesondere bevorzugt sind Methyl und Phenyl.

Bestandteil (A) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane (A) kann linear, cyclisch oder auch verzweigt sein. Der Gehalt an zu verzweigten Polyorganosiloxanen führenden tri- und/oder tetrafunktionellen Einheiten ist typischerweise sehr gering, vorzugsweise höchstens 20 Mol-%, insbesondere höchstens 0,1 Mol-%.

Besonders bevorzugt ist die Verwendung Vinylgruppen enthaltender Polydimethylsiloxane, deren Moleküle der allgemeinen Formel (3)

(ViMe₂SiO_{1/2})₂(ViMeSiO)ₚ(Me₂SiO)_{q} (3),

entsprechen, wobei die nichtnegativen ganzen Zahlen **p** und **q** folgende Relationen erfüllen: **p**≥0, 50<**(p+q)**<20000, vorzugsweise 200<**(p+q)**<1000, und 0<**(p**+1**)**/**(p+q)**<0.2. Insbesondere ist **p** = 0.

Die Viskosität des Polyorganosiloxans (A) beträgt bei 25°C vorzugsweise 0,5 bis 500 Pa·s, insbesondere 1 bis 200 Pa·s, ganz besonders bevorzugt 1 bis 100 Pa·s.

Die mindestens zwei SiH-Funktionen pro Molekül enthaltende Organosiliciumverbindung (B) besitzt vorzugsweise eine Zusammensetzung der durchschnittlichen allgemeinen Formel (4)

HₐR³_{b}SiO_{(4-a-b)/2} (4),

in der
- **R³**: einen einwertigen, gegebenenfalls halogen- oder cyanosubstituierten, über SiC-gebundenen C₁-C₁₈-Kohlenwasserstoffrest, der frei ist von aliphatischen Kohlenstoff-Kohlenstoff Mehrfachbindungen und
- **a** und **b**: nichtnegative ganze Zahlen sind,
mit der Maßgabe, dass 0.5<**(a+b)**<3,0 und 0<**a**<2, und dass mindestens zwei siliciumgebundene Wasserstoffatome pro Molekül vorhanden sind.

Beispiele für **R³** sind die für **R²** angegebenen Reste. **R³** weist vorzugsweise 1 bis 6 Kohlenstoffatome auf. Insbesondere bevorzugt sind Methyl und Phenyl.

Bevorzugt ist die Verwendung einer drei oder mehr SiH-Bindungen pro Molekül enthaltenden Organosiliciumverbindung (B). Bei Verwendung einer nur zwei SiH-Bindungen pro Molekül aufweisenden Organosiliciumverbindung (B) empfiehlt sich die Verwendung eines Polyorganosiloxans (A), das über mindestens drei Alkenylgruppen pro Molekül verfügt.

Der Wasserstoffgehalt der Organosiliciumverbindung (B), welcher sich ausschließlich auf die direkt an Siliciumatome gebundenen Wasserstoffatome bezieht, liegt vorzugsweise im Bereich von 0,002 bis 1,7 Gew.-% Wasserstoff, vorzugsweise von 0,1 bis 1,7 Gew.-% Wasserstoff.

Die Organosiliciumverbindung (B) enthält vorzugsweise mindestens drei und höchstens 600 Siliciumatome pro Molekül. Bevorzugt ist die Verwendung von Organosiliciumverbindung (B), die 4 bis 200 Siliciumatome pro Molekül enthält.

Die Struktur der Organosiliciumverbindung (B) kann linear, verzweigt, cyclisch oder netzwerkartig sein.

Besonders bevorzugte Organosiliciumverbindungen (B) sind lineare Polyorganosiloxane der allgemeinen Formel (5)

(HR⁴₂SiO_{1/2})_{c}(R⁴₃SiO_{1/2})_{d}(HR⁴SiO_{2/2})ₑ(R⁴₂SiO_{2/2})_{f} (5),

wobei
**R⁴** die Bedeutungen von **R³** hat und
die nichtnegativen ganzen Zahlen **c, d, e** und f folgende Relationen erfüllen: **(c+d)**=2, **(c+e)** >2, 5< **(e+f)** <200 und 1<**e**/(**e +f**) <0,1.

Die SiH-funktionelle Organosiliciumverbindung (B) ist vorzugsweise in einer solchen Menge in der vernetzbaren Siliconmasse enthalten, dass das Molverhältnis von SiH-Gruppen zu Alkenylgruppen bei 0,5 bis 5, insbesondere bei 1,0 bis 3,0 liegt.

Als Hydrosilylierungskatalysator (C) können alle bekannten Katalysatoren eingesetzt werden, welche die bei der Vernetzung von additionsvernetzenden Siliconmischungen ablaufenden Hydrosilylierungsreaktionen katalysieren.

Als Hydrosilylierungskatalysatoren (C) werden insbesondere Metalle und deren Verbindungen aus der Gruppe Platin, Rhodium, Palladium, Ruthenium und Iridium eingesetzt.
Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂·Olefin)₂ und H(PtCl₃·Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan. Ebenfalls sehr geeignet sind die in EP 1 077 226 A1 und EP 0 994 159 A1 beschriebenen Platinverbindungen, deren diesbezügliche Offenbarung auch Gegenstand dieser Anmeldung sein soll.

Der Hydrosilylierungskatalysator (C) kann in jeder beliebigen Form eingesetzt werden, beispielsweise auch in Form von Hydrosilylierungskatalysator enthaltenden Mikrokapseln, oder Polyorganosiloxanpartikeln, wie beschrieben in EP 1 006 147 A1, deren diesbezügliche Offenbarung auch Gegenstand dieser Anmeldung sein soll.

Der Gehalt an Hydrosilylierungskatalysatoren (C) wird vorzugsweise so gewählt, dass die additionsvernetzbare Siliconmischung (S) einen Pt-Gehalt von 0,1 bis 200 Gew.-ppm, insbesondere von 0,5 bis 40 Gew.-ppm besitzt.

Die Komponente (D) ist vorzugsweise ein an der 3-Aminogruppe über eine zweiwertige organische Gruppe an die Kieselsäure gebundenes 3-Amino-1,2,4-triazol-5-thiol.

Vorzugsweise ist Komponente (D) herstellbar durch Addition von 3-Amino-1,2,4-triazol-5-thiol an eine Epoxygruppe, welche über eine zweiwertige organische Gruppe an die Kieselsäure gebunden ist. Vorzugsweise hat die so hergestellte zweiwertige organische Gruppe, die an der linken Seite an ein Siliciumatom der Kieselsäure gebunden ist und an der rechten Seite eine Epoxygruppe trägt, die Struktur der allgemeinen Formel (6) der Kieselsäure gebunden ist und an der rechten Seite eine Epoxygruppe trägt, die Struktur der allgemeinen Formel (6)

-(CH₂)_{g}[O(CH₂)ₕ]ᵢ(CH₂)ₖ- (6),

in der
- **g**: Werte von 1 bis 10, insbesondere 1 bis 4,
- **h**: Werte von 1 bis 4, insbesondere 2 oder 3,
- **i**: die Werte 0, 1, 2 oder 3, insbesondere 1, und
- **k**: Werte von 1 bis 10, insbesondere 1 bis 5 bedeuten.

Vorzugsweise wird die zweiwertige organische Gruppe, die an ein Siliciumatom der Kieselsäure gebunden ist und eine Epoxygruppe trägt, durch Umsetzung eines Epoxyalkoxysilans, das eine über eine zweiwertige organische Gruppe angebundene Epoxygruppe aufweist, mit Kieselsäure hergestellt.

Beispiele für geeignete Epoxyalkoxysilane sind Glycidoxypropyltrimethoxysilan, Glycidoxypropyldimethoxymethylsilan Glycidoxyhexyltrimethoxysilan und Glycidoxyhexyldimethoxymethylsilan.

Die Kieselsäure in Komponente (D) ist vorzugsweise pyrogen hergestellte Kieselsäure oder gefällte Kieselsäure, bevorzugt mit einer BET-Oberfläche von mindestens 50 m²/g, insbesondere 100 bis 400 m²/g.

Vorzugsweise beträgt die Reaktionszeit bei der Umsetzung eines Epoxyalkoxysilans mit Kieselsäure 1 h bis 3 Tage, besonders bevorzugt 6 h bis 2 Tage, insbesondere 12 bis 36 h. Die Reaktionstemperatur beträgt vorzugsweise 20°C bis 100°C, insbesondere 40°C bis 80 °C. Der Reaktionsdruck beträgt vorzugsweise 0,1 bis 10 bar, insbesondere 0,5 bis 2 bar.

Pro Gramm Kieselsäure werden vorzugsweise 0,01 bis 0,9 g, besonders bevorzugt 0,05 bis 0,5 g, insbesondere 0,1 bis 0,3 g Epoxyalkoxysilan eingesetzt.

Vorzugsweise wird danach die Kieselsäure, die über eine zweiwertige organische Gruppe eine Epoxygruppe trägt, mit 3-Amino-1,2,4-triazol-5-thiol zur Komponente (D) umgesetzt.

Bei der Umsetzung von Kieselsäure, die über eine zweiwertige organische Gruppe eine Epoxygruppe trägt, mit 3-Amino-1,2,4-triazol-5-thiol beträgt die bevorzugte Reaktionszeit 1 h bis 3 Tage, besonders bevorzugt 6 h bis 2 Tage, insbesondere 12 bis 36 h. Die Reaktionstemperatur beträgt vorzugsweise 20°C bis 100°C, insbesondere 40°C bis 80 °C. Der Reaktionsdruck beträgt vorzugsweise 0,1 bis 10 bar, insbesondere 0,5 bis 2 bar.

Pro mol Epoxygruppen an der Kieselsäure werden vorzugsweise 0,8 bis 1,5 mol , besonders bevorzugt 0,9 bis 1,1 mol 3-Amino-1,2,4-triazol-5-thiol eingesetzt.

Vorzugsweise werden nach der Addition von 3-Amino-1,2,4-triazol-5-thiol an die Epoxygruppe, welche über eine zweiwertige organische Gruppe an die Kieselsäure gebunden ist, noch freie Silanolgruppen auf der Kieselsäureoberfläche in der so hergestellten Komponente (D) durch Behandlung mit Organosilan, Organosilazan oder Organosiloxan nachhydrophobiert. Besonders bevorzugt ist die Nachhydrophobierung mit Hexamethyldisilazan. Der Druckverformungsrest wird durch die Nachhydrophobierung zusätzlich verringert.

Vorzugsweise beträgt der Gehalt des an Kieselsäure gebundenen 3-Amino-1,2,4-triazol-5-thiols (D) 20 bis 120 Gew.-ppm, insbesondere 30 bis 90 Gew.-ppm, jeweils bezogen auf die Siliconmischung (S).

Die Siliconmischung (S) kann neben der Kieselsäure mit angebundenem 3-Amino-1,2,4-triazol-5-thiol (D) mindestens einen weiteren Füllstoff (E) enthalten.
Nicht verstärkende Füllstoffe (E) mit einer BET-Oberfläche von bis zu 50 m²/g, sind beispielsweise Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver. Verstärkende Füllstoffe, also Füllstoffe mit einer BET-Oberfläche von mindestens 50 m²/g, insbesondere 100 bis 400 m²/g sind beispielsweise pyrogen hergestellte Kieselsäure, gefällte Kieselsäure, Aluminiumhydroxid, Ruß, wie Furnace- und Acetylenruß und Silicium-Aluminium-Mischoxide großer BET-Oberfläche.
Die genannten Füllstoffe (E) können hydrophobiert sein, beispielsweise durch die Behandlung mit Organosilanen, Organosilazanen bzw. -siloxanen oder durch Verätherung von Hydroxylgruppen zu Alkoxygruppen. Es kann eine Art von Füllstoff (E), es kann auch ein Gemisch von mindestens zwei Füllstoffen (E) eingesetzt werden.

Vorzugsweise enthalten die Siliconmischungen (S) mindestens 3 Gew.-%, besonders bevorzugt mindestens 5 Gew.-%, insbesondere mindestens 10 Gew.-% und höchstens 40 Gew.-% Füllstoffanteil (E) .

Zusätze können beispielsweise harzartige Polyorganosiloxane, die von den Polyorganosiloxanen (A) und (B) verschieden sind, Dispergierhilfsmittel, Lösungsmittel, Haftvermittler, Pigmente, Farbstoffe, Weichmacher, organische Polymere, Hitzestabilisatoren und Inhibitoren sein. Hierzu zählen Zusätze, wie Farbstoffe und Pigmente. Des Weiteren können als Bestandteil thixotropierende Bestandteile, wie hochdisperse Kieselsäure oder andere handelsübliche Thixotropieadditive enthalten sein. Auch können als weiterer Bestandteil (F) zur besseren Vernetzung vorzugsweise maximal 0,5 Gew, besonders bevorzugt maximal 0,3 Gew.-%, insbesondere <0,1% Gew.-% Peroxid vorhanden sein.

Enthalten sein können weitere Zusätze, die der gezielten Einstellung der Verarbeitungszeit, Anspringtemperatur und Vernetzungsgeschwindigkeit der vernetzenden Massen dienen. Diese Inhibitoren und Stabilisatoren sind auf dem Gebiet der vernetzenden Massen sehr gut bekannt.

Die Herstellung oder Compoundierung der Siliconmischungen (S) erfolgt bevorzugt durch Mischen der Komponenten (A) und (D) und gegebenenfalls Füllstoff (E). Die Vernetzung nach Zugabe von Vernetzer (B) und Hydrosilylierungskatalysator (C) erfolgt vorzugsweise durch Erwärmen, vorzugsweise bei 30 bis 250°C, bevorzugt bei mindestens 50°C, insbesondere bei mindestens 100°C, bevorzugt bei 150-210°C.

Alle vorstehenden Symbole der vorstehenden Formeln weisen ihre Bedeutungen jeweils unabhängig voneinander auf. In allen Formeln ist das Siliciumatom vierwertig. Die Summe aller Bestandteile der Siliconmischung (S) ergibt 100 Gew.-%.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1:

100 g pyrogene Kieselsäure mit einer BET-Oberfläche von 300 m²/g (käuflich erhältlich bei Wacker Chemie AG unter dem Namen HDK® T30) werden mit 18,0 g (0,076 mol) Glycidoxypropyltrimethoxysilan (käuflich erhältlich bei Wacker Chemie AG unter dem Namen GENIOSIL® GF 80) nach EP 0 926 210 B2 in Analogie zum dortigen Beispiel 7 umgesetzt. Laut Elementaranalyse wird ein Produkt mit 0,75 mmol Epoxyfunktionalität pro 1 g silylierter Kieselsäure erhalten. Dann werden 6,097 g (52,5 mmol) 3-Amino-1,2,4-triazol-5-thiol in 3,5 L Methanol vorgelegt und 70 g (entsprechend 52,5 mmol Epoxyfuntionalität) der zuvor hergestellten silylierten Kieselsäure portionsweise zugegeben. Nach beendeter Zugabe wird noch 24 Stunden unter Rückfluss erhitzt. Anschließend wird das Lösemittel am Rotationsverdampfer abgezogen. Man erhält 66,85 g (88 % d. Th.) eines weißen Pulvers. Laut Elementaranalyse ist 3-Amino-1,2,4-triazol-5-thiol bezüglich des Schwefelgehaltes quantitativ, bezüglich des Stickstoffgehaltes zu 90 % gebunden. Nach 1H-NMR-Spektrum ist 3-Amino-1,2,4-triazol-5-thiol mit 92 %iger Selektivität über die 3-Aminogruppe unter Ringöffnung an die Epoxygruppe gebunden worden.

### Beispiel 2:

Herstellung des Compression Set Batches: Es werden in einem Laborkneter 15 g eines Vinyl-terminierten, linearen Polydimethylsiloxans mit einer Viskosität von 20.000 mPa s ("Vinylpolymer 20000") vorgelegt. Dann werden portionsweise 8,7 g der zuvor beschriebenen, 3-Amino-1,2,4-triazol-5-thiol-haltigen Kieselsäure unter ständigem Kneten eingearbeitet. Dann wird noch 1 Stunde geknetet. Anschließend werden noch 51,7 g Vinylpolymer 20000 portionsweise eingearbeitet und noch 1 weitere Stunde geknetet. Ausbeute 60,0 g (80 % d. Th.).

### Beispiel 3:

Es wird ein vernetztes Siliconelastomer analog ELASTOSIL® 3005/40 von Wacker Chemie AG enthaltend Komponenten (A), (B) (C) und (E), mit 0,7 Gew.-% des weiter oben beschiebenen Compression Set Batches als Komponente (D) hergestellt (entsprechend einem Gehalt von 70 ppm des Kieselsäuregebundenen Wirkstoffs 3-Amino-1,2,4-triazol-5-thiol).
Das Elastomer ist farblos und transparent. Der Druckverformungsrest nach DIN ISO 815 beträgt nach 7 Tagen bei einer Temperatur von 175 °C 44 %.

### Beispiel 4:

Bei der nach Beispiel 1 hergestellten Kieselsäure mit gebundenem 3-Amino-1,2,4-triazol-5-thiol (D) erfolgt eine Nachhydrophobierung noch vorhandener Silanolgruppen auf der Kieselsäureoberfläche: In einen 250 mL Dreihalskolben mit Rückflusskühler werden 140 mL Hexamethyldisiloxan (käuflich erhältlich bei Wacker Chemie AG unter dem Namen ÖL AK 065) unter einer Stickstoffatmosphäre vorgelegt. Dazu werden erst 2,77 g Hexamethyldisilazan und anschließend unter Erdung 16 g der zuvor in Beispiel 1 beschriebenen mit 3-Amino-1,2,4-triazol-5-thiol funktionalisierten Kieselsäure zugegeben. Anschließend wird während 30 Minuten auf 80 °C erhitzt und noch 2 Stunden bei dieser Temperatur gerührt. Man läßt unter Rühren auf Raumtemperatur abkühlen und anschließend noch 16 Stunden bei Raumtemperatur stehen. Dann wird am Rotationsverdampfer bei 65 °C unter stufenweiser Druckreduzierung, zuletzt 20 Minuten bei < 1,0 mbar Druck zur Trockene eingedampft. Das verklumpte Pulver wird zerkleinert und noch 2 Stunden im Trockenschrank bei 120 °C unter gelindem Stickstoffstrom getrocknet. Ausbeute: 13,5 g (92 % d. Th.).

### Beispiel 5:

Herstellung des Compression Set Batches: Es werden in einem Laborkneter 15 g eines Vinyl-terminierten, linearen Polydimethylsiloxans mit einer Viskosität von 20.000 mPa s ("Vinylpolymer 20000") vorgelegt. Dann werden portionsweise 6,9 g der in Beispiel 4 beschriebenen, 3-Amino-1,2,4-triazol-5-thiol-haltigen und mit Hexamethyldisilazan nachhydrophobierten Kieselsäure unter ständigem Kneten eingearbeitet. Dann wird noch 1 Stunde geknetet. Anschließend werden noch 38,1 g Vinylpolymer 20000 portionsweise eingearbeitet und noch 1 weitere Stunde geknetet. Ausbeute 45,3 g (76 % d. Th.).

### Beispiel 6:

Es wird ein vernetztes Siliconelastomer analog ELASTOSIL® 3005/40 von Wacker Chemie AG enthaltend Komponenten (A), (B) (C) und (E), hergestellt, welches 0,7 Gew.-% des zuvor beschriebenen, nachhydrophobierten Compression Set Batches enthält (entsprechend einem Gehalt von 70 ppm des Kieselsäuregebundenen Wirkstoffs 3-Amino-1,2,4-triazol-5-thiol).

Das Elastomer ist farblos und transparent. Der Druckverformungsrest nach DIN ISO 815 beträgt nach 7 Tagen bei einer Temperatur von 175 °C 36 %.

### Vergleichsbeispiel 1:

Es wird ein vernetztes Siliconelastomer wie in den Beispielen 3 und 6, aber ohne einen Compression Set Batch, hergestellt. Das Elastomer ist farblos und transparent. Der Druckverformungsrest nach DIN ISO 815 beträgt nach 7 Tagen bei einer Temperatur von 175 °C 87 %.

### Vergleichsbeispiel 2:

Es wird ein vernetztes Siliconelastomer wie in den Beispielen 3 und 6, aber mit nachstehend beschriebenem Compression Set Batch, hergestellt.
6,9 g pyrogene Kieselsäure mit einer BET-Oberfläche von 300 m²/g (käuflich erhältlich bei Wacker Chemie AG unter dem Namen HDK® T30) werden und einer Lösung von 1 g 3-Amino-1,2,4-triazol-5-thiol in 5 g Wasser vermischt und das Wasser abgedampft.
Es werden in einem Laborkneter 15 g eines Vinyl-terminierten, linearen Polydimethylsiloxans mit einer Viskosität von 20.000 mPa s ("Vinylpolymer 20000") vorgelegt. Dann wird portionsweise die zuvor beschriebene, 3-Amino-1,2,4-triazol-5-thiol-haltige Kieselsäure unter ständigem Kneten eingearbeitet. Dann wird noch 1 Stunde geknetet. Anschließend werden noch 51,7 g Vinylpolymer 20000 portionsweise eingearbeitet und noch 1 weitere Stunde geknetet. Ausbeute 58,5 g (78 % d. Th.).
Das Elastomer hat eine leicht gelbliche Färbung und ist leicht trübe. Der Druckverformungsrest nach DIN ISO 815 beträgt nach 7 Tagen bei einer Temperatur von 175 °C 46 %.

Umsetzung von HDK® T30 mit Geniosil GF 80® in Beispiel 1:

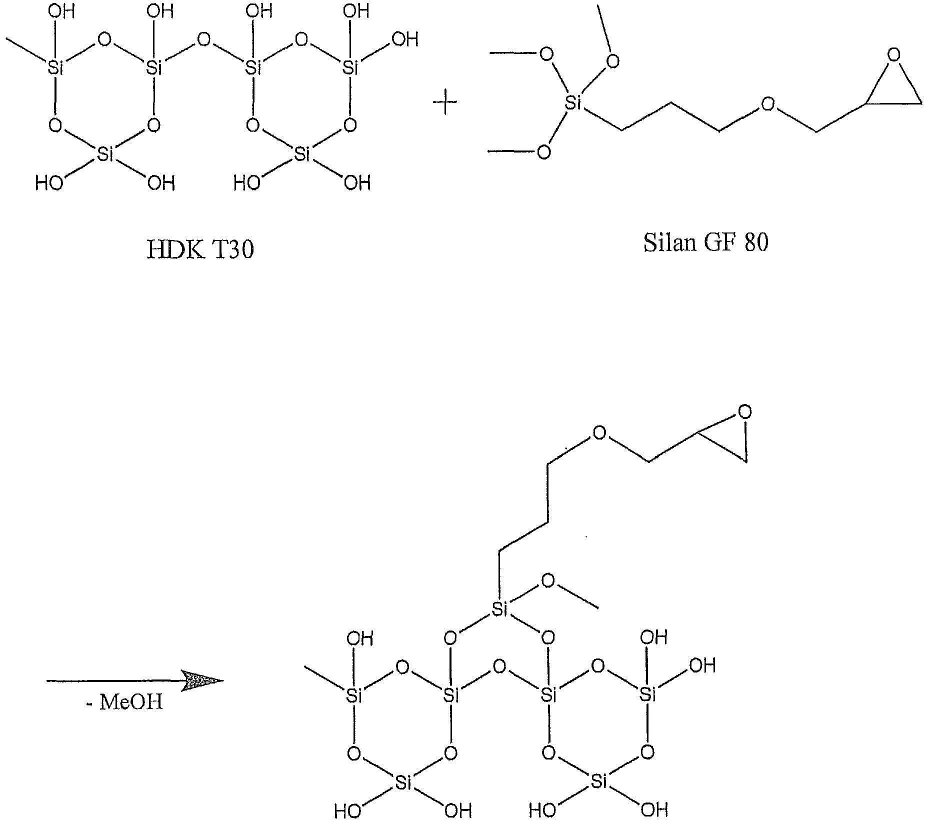

Addition von 3-Amino-1,2,3-triazol-5-thiol unter Ringöffnung an die Epoxygruppe des kieselsäuregebundenen Geniosil GF 80® in Beispiel 1:

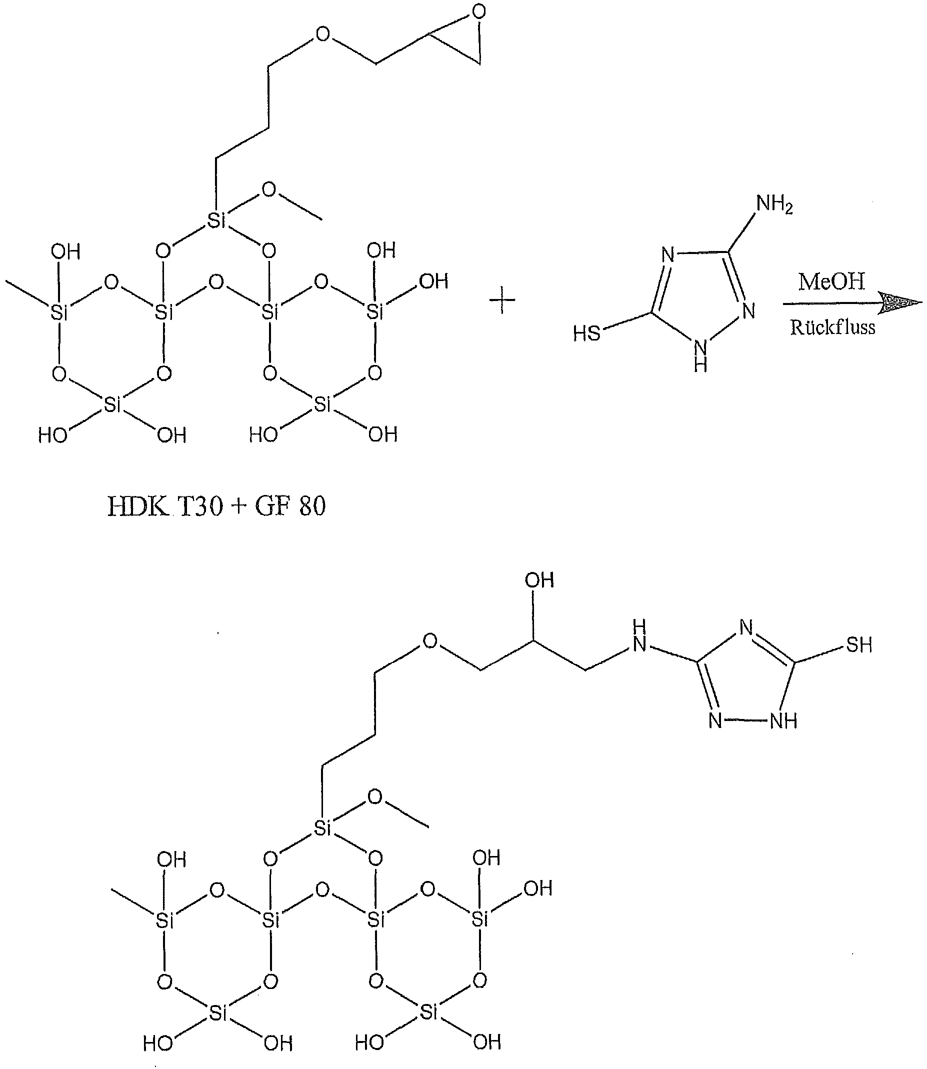

Nachhydrophobierung der verbliebenen Silanolgruppen auf der Kieselsäureoberfläche in Beispiel 4:

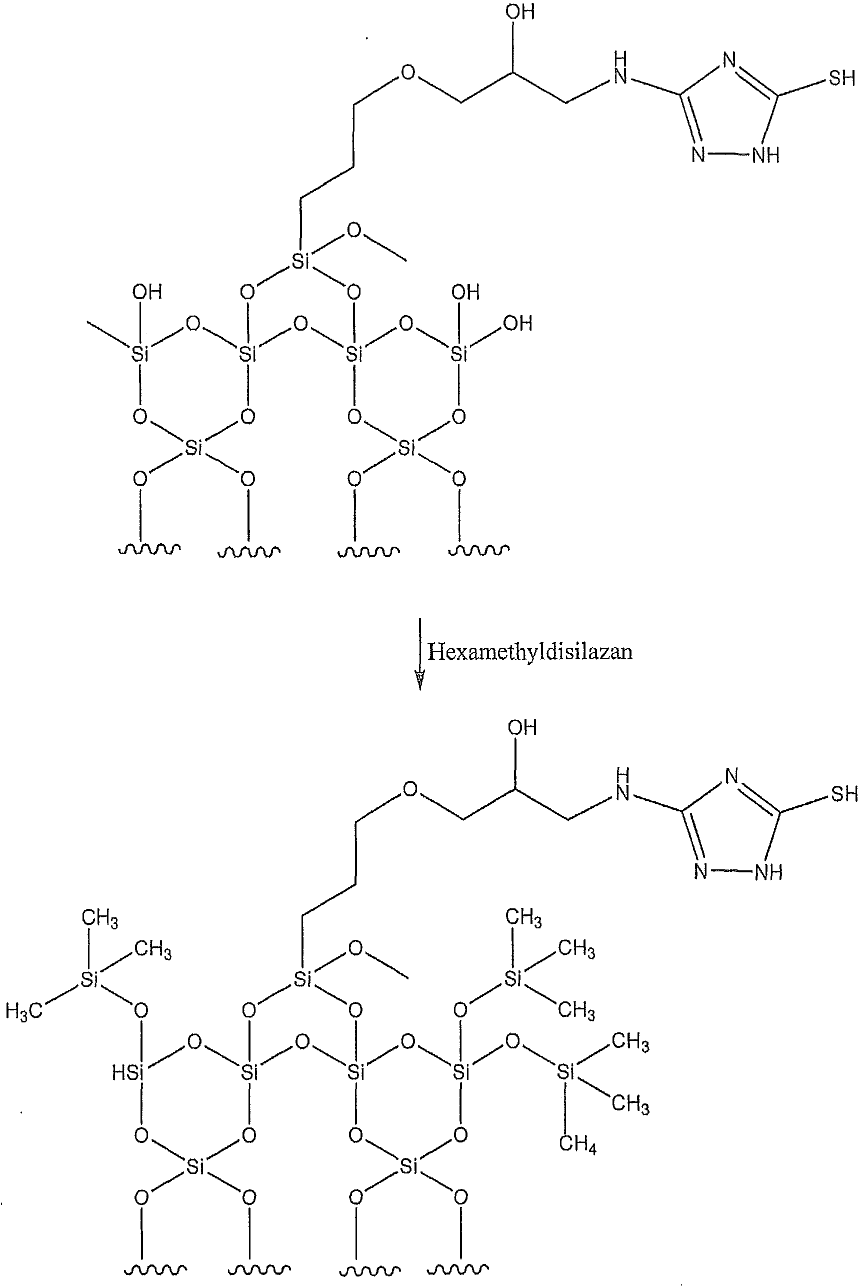

## Patentansprüche

1. Additionsvernetzbare Siliconmischung (S), enthaltend
(A) mindestens zwei Alkenylgruppen pro Molekül enthaltendes Polyorganosiloxan mit einer Viskosität bei 25°C von 0,2 bis 1000 Pa·s,
(B) SiH-funktionelles Vernetzungsmittel,
(C) Hydrosilylierungskatalysator, und
(D) 10 bis 200 Gew.-ppm bezogen auf die Siliconmischung (S) an Kieselsäure gebundenes 3-Amino-1,2,4-triazol-5-thiol.

2. Additionsvernetzbare Siliconmischung (S) nach Anspruch 1, bei der als Polyorganosiloxan (A) Vinylgruppen enthaltende Polydimethylsiloxane eingesetzt werden, deren Moleküle der allgemeinen Formel (3)
(ViMe₂SiO_{1/2})₂(ViMeSiO)ₚ(Me₂SiO)_{q} (3),
entsprechen, wobei
**Vi** ein Vinylrest und **Me** ein Methylrest bedeutet und die nichtnegativen ganzen Zahlen **p** und **q** folgende Relationen erfüllen: **p**≥0, 50<**(p+q)**<20000, vorzugsweise 200<**(p+q)**<1000, und 0<(**p**+1)/**(p+q)**<0.2.

3. Additionsvernetzbare Siliconmischung (S) nach Anspruch 1 oder 2, bei der als SiH-funktionelles Vernetzungsmittel (B) eine mindestens zwei SiH-Funktionen pro Molekül enthaltende Organosiliciumverbindung (B) eingesetzt wird, die eine Zusammensetzung der durchschnittlichen allgemeinen Formel (4)
HₐR³_{b}SiO_{(4-a-b)/2} (4),
besitzt, in der
**R³** einen einwertigen, gegebenenfalls halogen- oder cyanosubstituierten, über SiC-gebundenen C₁-C₁₈-Kohlenwasserstoffrest, der frei ist von aliphatischen Kohlenstoff-Kohlenstoff Mehrfachbindungen und
**a** und **b** nichtnegative ganze Zahlen sind, mit der Maßgabe, dass 0.5<**(a+b)**<3,0 und 0<**a**<2, und dass mindestens zwei siliciumgebundene Wasserstoffatome pro Molekül vorhanden sind.

4. Additionsvernetzbare Siliconmischung (S) nach einem der vorangehenden Ansprüche, bei der der Hydrosilylierungskatalysator (C) ausgewählt wird aus Metallen und deren Verbindungen aus der Gruppe Platin, Rhodium, Palladium, Ruthenium und Iridium.

5. Additionsvernetzbare Siliconmischung (S) nach einem der vorangehenden Ansprüche, bei der die Komponente (D) ein an der 3-Aminogruppe über eine zweiwertige organische Gruppe an die Kieselsäure gebundenes 3-Amino-1,2,4-triazol-5-thiol ist.

6. Verfahren zur Herstellung von über eine zweiwertige organische Gruppe an Kieselsäure gebundenem 3-Amino-1,2,4-triazol-5-thiol (D), bei dem in einem ersten Schritt ein Epoxyalkoxysilan, das eine über eine zweiwertige organische Gruppe angebundene Epoxygruppe aufweist, mit Kieselsäure umgesetzt wird, in einem zweiten Schritt die Kieselsäure, die über eine zweiwertige organische Gruppe eine Epoxygruppe trägt, mit 3-Amino-1,2,4-triazol-5-thiol zur Komponente (D) umgesetzt wird und
bei dem im Anschluss an den zweiten Schritt noch freie Silanolgruppen auf der Kieselsäureoberfläche in der Komponente (D) durch Behandlung mit Organosilan, Organosilazan oder Organosiloxan nachhydrophobiert werden.

7. Additionsvernetzbare Siliconmischung (S) nach einem der Ansprüche 1 bis 5, welche mindestens einen weiteren Füllstoff (E) enthält.

## Claims

1. Addition-crosslinkable silicone mixture (S) comprising
(A) polyorganosiloxane comprising at least two alkenyl groups per molecule with viscosity at 25°C of from 0.2 to 1000 Pa·s,
(B) SiH-functional crosslinking agent,
(C) hydrosilylation catalyst, and
(D) from 10 to 200 ppm by weight, based on the silicone mixture (S), of 3-amino-1,2,4-triazole-5-thiol bonded to silica.

2. Addition-crosslinkable silicone mixture (S) according to Claim 1, in which polydimethylsiloxanes comprising vinyl groups are used as polyorganosiloxane (A), where molecules of these correspond to the general formula (3)
(ViMe₂SiO_{1/2})₂(ViMeSiO)ₚ(Me₂SiO)_{q} (3),
where
**Vi** is a vinyl moiety and **Me** is a methyl moiety, and the non-negative integers **p** and **q** comply with the following relationships: **p**≥0, 50<**(p+q)**<20000, preferably 200<**(p+q)**<1000, and 0<(**p**+1)/**(p+q)**<0.2.

3. Addition-crosslinkable silicone mixture (S) according to Claim 1 or 2, in which an organosilicon compound (B) comprising at least two SiH functions per molecule is used as SiH-functional crosslinking agent (B), and the composition thereof has the average general formula (4)
HₐR³_{b}SiO_{(4-a-b)/2} (4),
in which
**R³** is a monovalent, optionally halogen- or cyano-substituted C₁-C₁₈- hydrocarbon moiety bonded by way of SiC and free from aliphatic carbon-carbon multiple bonds, and
**a** and **b** are non-negative integers, with the proviso that 0.5<**(a+b)**<3.0 and 0<**a**<2, and that at least two silicon-bonded hydrogen atoms are present in each molecule.

4. Addition-crosslinkable silicone mixture (S) according to any of the preceding claims, in which the hydrosilylation catalyst (C) is selected from metals and compounds thereof from the group of platinum, rhodium, palladium, ruthenium, and iridium.

5. Addition-crosslinkable silicone mixture (S) according to any of the preceding claims, in which component (D) is a 3-amino-1,2,4-triazole-5-thiol bonded to the silica at the 3-amino group by way of a divalent organic group.

6. Process for the production of 3-amino-1,2,4-triazole-5-thiol (D) bonded to silica by way of a divalent organic group, in which in a first step an epoxyalkoxysilane having an epoxy group linked by way of a divalent organic group is reacted with silica, and in a second step the silica which bears an epoxy group by way of a divalent organic group is reacted with 3-amino-1,2,4-triazole-5-thiol to give component (D), and the second step is followed by treatment with organosilane, organosilazane, or organosiloxane for post-hydrophobization of remaining free silanol groups on the silica surface in component (D).

7. Addition-crosslinkable silicone mixture (S) according to any of Claims 1 to 5, which comprises at least one other filler (E).

## Revendications

1. Mélange de silicone réticulable par addition (S), contenant :
(A) un polyorganosiloxane contenant au moins deux groupes alcényle par molécule ayant une viscosité à 25 °C de 0,2 à 1 000 Pa·s,
(B) un agent de réticulation à fonction SiH,
(C) un catalyseur d'hydrosilylation et
(D) 10 à 200 ppm en poids, par rapport au mélange de silicone (S), de 3-amino-1,2,4-triazole-5-thiol relié à de la silice.

2. Mélange de silicone réticulable par addition (S) selon la revendication 1, dans lequel des polydiméthylsiloxanes contenant des groupes vinyle sont utilisés en tant que polyorganosiloxane (A), dont les molécules correspondent à la formule générale (3)
(ViMe₂SiO_{1/2})₂(ViMeSiO)ₚ(Me₂SiO)_{q} (3)
dans laquelle
**Vi** signifie un radical vinyle et **Me** un radical méthyle, et les nombres entiers non négatifs **p** et **q** satisfont les relations suivantes : **p** ≥ 0, 50 < **(p+q)** < 20 000, de préférence 200 < **(p+q)** < 1 000, et 0 < (**p**+1)/**(p+q)** < 0,2.

3. Mélange de silicone réticulable par addition (S) selon la revendication 1 ou 2, dans lequel un composé d'organosilicium (B) contenant au moins deux fonctions SiH par molécule est utilisé en tant qu'agent de réticulation à fonction SiH (B), qui présente une composition selon la formule générale moyenne (4)
HₐR³_{b}SiO_{(4-a-b)/2} (4)
dans laquelle
**R³** est un radical hydrocarboné monovalent en C₁-C₁₈ relié par SiC, éventuellement substitué par halogène ou cyano, qui est exempt de liaisons carbone-carbone multiples aliphatiques, et
**a** et **b** sont des nombres entiers non négatifs,
à condition que 0,5 < **(a+b)** < 3,0 et 0 < **a** < 2, et qu'au moins deux atomes d'hydrogène reliés à du silicium par molécule soient présents.

4. Mélange de silicone réticulable par addition (S) selon l'une quelconque des revendications précédentes, dans lequel le catalyseur d'hydrosilylation (C) est choisi parmi les métaux et leurs composés du groupe constitué par le platine, le rhodium, le palladium, le ruthénium et l'iridium.

5. Mélange de silicone réticulable par addition (S) selon l'une quelconque des revendications précédentes, dans lequel le composant (D) est un 3-amino-1,2,4-triazole-5-thiol relié à de la silice par un groupe organique bivalent au niveau du groupe 3-amino.

6. Procédé de fabrication d'un 3-amino-1,2,4-triazole-5-thiol (D) relié à de la silice par un groupe organique bivalent, selon lequel, lors d'une première étape, un époxyalcoxysilane, qui comprend un groupe époxy relié par un groupe organique bivalent, est mis en réaction avec de la silice, lors d'une deuxième étape, la silice, qui porte un groupe époxy par un groupe organique bivalent, est mise en réaction avec du 3-amino-1,2,4-triazole-5-thiol pour former le composant (D), et
selon lequel, après la deuxième étape, les groupes silanol encore libres sur la surface de la silice dans le composant (D) sont soumis à une hydrophobation secondaire par traitement avec un organosilane, un organosilazane ou un organosiloxane.

7. Mélange de silicone réticulable par addition (S) selon l'une quelconque des revendications 1 à 5, qui contient au moins une charge supplémentaire (E).
